# EUROPÄISCHE PATENTANMELDUNG

(11) **EP 2 145 667 A1**
(43) Veröffentlichungstag der Anmeldung: **20.01.2010**
(21) Anmeldenummer: 08012961.2
(22) Anmeldetag: 17.07.2008
(51) Int. Cl.: B01D 53/14

(54) **Verfahren und Vorrichtung zum Abtrennen von Kohlendioxid aus einem Abgas einer fossilbefeuerten Kraftwerksanlage**

(71) Anmelder: Siemens Aktiengesellschaft, 80333 München (DE)
(72) Erfinder: Joh, Ralph, Dr., 63500 Seligenstadt (DE); Schneider, Rüdiger, Dr., 65817 Eppstein (DE); Schramm, Henning, Dr., 60598 Frankfurt (DE)

(57) **Zusammenfassung**

Die Erfindung betrifft ein Verfahren zum Abtrennen von Kohlendioxid aus einem Rauchgas einer fossilbefeuerten Kraftwerksanlage. Bei dem Verfahren wird zunächst in einem Verbrennungsprozess ein fossiler Brennstoff (2) verbrannt, wobei ein heißes, kohlendioxidhaltiges Abgas (3) erzeugt wird. In einem nächsten Verfahrensschritt wird in einem Absorptionsprozess (4) kohlendioxidhaltiges Abgas (3) mit einem Absorptionsmedium (5) in Kontakt gebracht, wobei Kohlendioxid von dem Absorptionsmedium (5) aufgenommen wird, wobei ein beladenes Absorptionsmedium (6) gebildet wird. In einem anschließenden Verfahrensschritt wird in einem Desorptionsprozess (7) von dem beladenen Absorptionsmedium (6) gasförmiges Kohlendioxid (8) thermisch ausgetrieben. Dabei wird dem Desorptionsprozess (7) ein Dampf (9) zugeführt, der in das beladene Absorptionsmedium (6) eingedüst wird, wobei die durch die Kondensation des Dampfes (9) freiwerdende Kondensationswärme auf das beladene Absorptionsmedium (6) übertragen wird und gleichzeitig der Partialdruck des Kohlendioxids in der Desorptionseinheit abgesenkt wird.

## Beschreibung

Die Erfindung betrifft ein Verfahren zum Betreiben einer fossilbefeuerten Kraftwerksanlage und insbesondere ein Verfahren zum Abtrennen von Kohlendioxid aus einem Abgas einer fossilbefeuerten Kraftwerksanlage. Die Erfindung betrifft außerdem eine fossilbefeuerte Kraftwerksanlage mit einer Abscheideeinrichtung zum Abtrennen von Kohlendioxid aus einem Abgas.

Bei fossilbefeuerten Kraftwerksanlagen zur Erzeugung elektrischer Energie in großtechnischem Maßstab entsteht in hohem Maße ein kohlendioxidhaltiges Abgas durch die Verbrennung eines fossilen Brennstoffes. Neben Kohlendioxid enthält das Abgas weitere Bestandteile wie z.B. die Gase Stickstoff, Schwefeldioxid, Stickoxide und Wasserdampf sowie Festkörperpartikel, Stäube und Ruß. In neueren oder modernisierten Kraftwerksanlage findet bereits die Abscheidung der Festkörperbestandteile, die Abtrennung der Schwefeloxide sowie die katalytische Entfernung der Stickoxide Anwendung. Das in dem Abgas enthaltene Kohlendioxid wird bislang mit dem Abgas in die Atmosphäre entlassen. Das sich in der Atmosphäre ansammelnde Kohlendioxid behindert die Wärmeabstrahlung unserer Erde und begünstigt durch den so genannten Treibhauseffekt eine Erhöhung der Erdoberflächentemperatur. Um eine Reduzierung der Kohlendioxid-Emission bei fossilbefeuerten Kraftwerksanlagen zu erreichen, kann Kohlendioxid aus dem Abgas abgetrennt werden.

Zur Abtrennung von Kohlendioxid aus einem Gasgemisch sind insbesondere aus der chemischen Industrie verschiedene Methoden bekannt. Insbesondere zum Abtrennen von Kohlendioxid aus einem Abgas nach einem Verbrennungsprozess (Post-combustion CO₂ separation) ist das Verfahren der Absorption-Desorption bekannt.

Das Abtrennen von Kohlendioxid mit dem Absorptions-Desorptionsverfahren erfolgt mit einem Waschmittel. In einem klassischen Absorptions-Desorptions-Prozess wird das Abgas in einer Absorptionskolonne mit einem selektiven Lösungsmittel als Waschmittel in Kontakt gebracht. Dabei erfolgt die Aufnahme von Kohlendioxid durch einen chemischen oder physikalischen Prozess. Das gereinigte Abgas verlässt für eine weitere Verarbeitung oder Austragung die Absorptionskolonne. Das mit Kohlendioxid beladene Lösungsmittel wird zur Abtrennung des Kohlendioxids und Regenerierung des Lösungsmittels in eine Desorptionskolonne geleitet. Die Abtrennung in der Desorptionskolonne kann thermisch erfolgen. Dabei wird aus dem beladenen Lösungsmittel ein Gas- Dampfgemisch aus gasförmigem Kohlendioxid und verdampften Lösungsmittel ausgetrieben. Das verdampfte Lösungsmittel wird anschließend von dem gasförmigen Kohlendioxid separiert. Das Kohlendioxid kann nun in mehreren Stufen verdichtet, gekühlt und verflüssigt werden. In flüssigem oder gefrorenem Zustand kann das Kohlendioxid dann einer Lagerung oder einer weiteren Verwertung zugeführt werden. Das regenerierte Lösungsmittel wird zur Absorberkolonne zurückgeleitet, wo es wieder Kohlendioxid aus dem kohlendioxidhaltigen Abgas aufnehmen kann.

Das Hauptproblem bei den existierenden Verfahren zum Abtrennen von Kohlendioxid aus einem Gasgemisch im großtechnischen Maßstab ist insbesondere der sehr hohe Energieaufwand, der unter anderem in Form von Heizenergie für die Desorption benötigt wird.

Genereller Nachteil an bekannten Abtrennverfahren für Kohlendioxid aus einem Abgas, die in oder nach einen Kraftwerksprozess geschaltet sind, ist insbesondere der signifikante wirkungsgradverschlechternde Einfluss der Abtrennverfahren auf den Kraftwerksprozess. Zu der Verschlechterung des Wirkungsgrades kommt es, da die Energie zur Durchführung der Kohlendioxidabtrennung aus dem Kraftwerksprozess entnommen werden muss. Die Wirtschaftlichkeit einer fossilbefeuerten Kraftwerksanlage mit Kohlendioxid-Abtrennungsvorrichtung ist daher deutlich geringer als ohne Kohlendioxid-Abtrennungsvorrichtung.

Eine Aufgabe der Erfindung besteht darin, ein Verfahren zum Abtrennen von Kohlendioxid aus einem Abgas einer fossilbefeuerten Kraftwerksanlage vorzuschlagen, das eine hohe Abscheideeffizienz bei zugleich günstigem Gesamtanlagenwirkungsgrad des Kraftwerksprozesses ermöglicht.

Eine weitere Aufgabe der Erfindung ist es, eine fossilbefeuerte Kraftwerksanlage mit integrierter Abscheideeinrichtung für Kohlendioxid vorzuschlagen, welche eine hohe Abscheideeffizienz bei zugleich günstigem Gesamtwirkungsgrad der Kraftwerksanlage ermöglicht.

Die auf ein Verfahren gerichtete Aufgabe ist erfindungsgemäß gelöst mit einem Verfahren zum Abtrennen von Kohlendioxid aus einem Abgas einer fossilbefeuerten Kraftwerksanlage, bei dem in einem Verbrennungsprozess ein fossiler Brennstoff verbrannt wird, wobei ein heißes, kohlendioxidhaltiges Abgas erzeugt wird, bei dem in einem Absorptionsprozess kohlendioxidhaltiges Abgas mit einem Absorptionsmedium in Kontakt gebracht wird, wobei Kohlendioxid von dem Absorptionsmedium aufgenommen wird, wobei ein beladenes Absorptionsmedium gebildet wird, bei dem in einem Desorptionsprozess von dem beladenen Absorptionsmedium Kohlendioxid thermisch ausgetrieben wird, und ein Dampf zugeführt wird, der in das beladene Absorptionsmedium eingedüst wird, wobei die durch die Kondensation des Dampfes freiwerdende Kondensationswärme auf das beladene Absorptionsmedium übertragen wird.

Die Erfindung geht dabei von der Überlegung aus, dass die direkt in das beladene Absorptionsmedium eingebrachte Kondensationswärme signifikant zum thermischen austreiben des Kohlendioxids beiträgt. Erfindungsgemäß wird dabei der Dampf in den Desorptionsprozess eingebracht. Durch die Unterstützung des Desorptionsprozesses mit der Kondensationswärme des Dampfes wird die Heizeinrichtung im Desorptionsprozess entlastet. Der Dampf wird innerhalb der Kolonne kondensiert, wodurch die Kondensationswärme direkt auf das beladene Absorptionsmedium übertragen wird. Daher kann ein Dampf mit niedriger Temperatur verwendet werden, da keine Verluste durch eine Wärmeübergang auftreten, wie z.B. bei einem indirekten Wärmeübergang in einem Wärmetauscherprozess.

Da für die direkte Eindüsung ein Dampf mit niedrigerem Druck- und Temperaturniveau verwendet wird, kann höherwertiger Dampf eingespart werden. Dieser höherwertigere Dampf wird sonst im Allgemeinen der Überströmleitung einer Niederdruckturbine entnommen. Der eingesparte höherwertigere Dampf steht somit dem Dampfentspannungsprozess im Niederdruckteil der Dampfturbine zur Erzeugung elektrischer Energie zur Verfügung. Dadurch wird eine Zunahme des Gesamtwirkungsgrads der fossilbefeuerten Kraftwerksanlage erreicht.

Neben der Entlastung der Heizeinrichtung durch die eingebrachte Kondensationswärme, wird der Desorptionsprozess durch das erfindungsgemäße Verfahren zudem dahingehend begünstigt, dass durch den eingebrachten Dampf der Partialdruck des bereits ausgegasten Kohlendioxids abgesenkt wird. Dies bedeutet eine Herabsetzung der Konzentration an Kohlendioxid in der Gasphase, wodurch das Austreiben des in dem beladenen Absorptionsmedium gebundenen Kohlendioxids begünstigt wird. Dadurch muss weniger Absorptionsmedium verdampft werden, wodurch weniger Wärme durch die Heizeinrichtung in den Desorptionsprozess eingebracht werden muss. Da die Heizeinrichtung ebenso mit Dampf betrieben wird, reduziert sich dadurch der Dampfverbrauch. Der eingesparte Dampf steht daher dem Kraftwerksprozess zur Verfügung und kann zur Erhöhung des Gesamtwirkungsgrads beitragen.

Erfindungsgemäß wird durch das Verfahren nur ein Teil der erforderlichen Wärmeenergie zum thermischen Austreiben des Kohlendioxids aus dem beladenem Absorptionsmedium eingebracht. Ein weiterer Teil der erforderlichen Wärmeenergie wird durch die Heizeinrichtung, und vornehmlich indirekt über einen Wärmetauscherprozess in den Desorptionsprozess eingebracht. Somit kann die zum Austreiben von Kohlendioxid aus dem beladenen Absorptionsmedium erforderliche Energie maßgeblich reduziert werden. Die eingesparte Energie steht folglich dem Kraftwerksprozess zur Verfügung, wodurch sich der Wirkungsgrad der Kraftwerksanlage deutlich erhöht.

Das Verfahren zum Abtrennen von Kohlendioxid aus einem Abgas einer fossilbefeuerten Kraftwerksanlage ermöglicht somit einen wesentlichen effizienteren Betrieb durch einen erhöhten Gesamtwirkungsgrad der Kraftwerksanlage. Dies wird dadurch erreicht, dass Energie zum Betrieb des Desorptionsprozesses eingespart wird. Die Erfindung ermöglicht zudem die nachträgliche Installation einer Kohlendioxid-Abscheideeinrichtung unter Erfüllung ökonomischer Bedingungen.

Vorteilhafterweise wird durch die eingedüste Dampfmenge in etwa die Menge an Absorptionsmedium ausgeglichen, die dem Absorptionsmittelkreislauf durch den Absorptions-/Desorptionsprozess entzogen wird. Dies ist möglich, da durch die Kondensation des Dampfes im Desorptionsprozess Wasser eingebracht wird. Da die verwendeten Absorptionsmedien im Allgemeinen wasserlöslich sind, und durch den Prozess ohnehin Verluste an Absorptionsmitte durch Abdampfen entstehen, werden durch das eingebrachte Wasser Absorptionsmittelverluste im Absorber-Desorber-Kreislauf ausgeglichen. Bei herkömmlichen Verfahren ist zum Ausgleich von Absorptionsmittelverlusten ein Makeup-Wasserstrom vorhanden. Durch die Anwendung des erfindungsgemäßen Verfahrens kann dieser eingespart werden.

In einer bevorzugten Ausführung des Kohlendioxid-Abtrennungsverfahrens wird der zugeführte Dampf an mehreren Stellen in den Desorptionsprozess eingedüst. Dadurch wird eine gleichmäßige Verteilung innerhalb des Desorptionsprozesses erzielt.

Der Dampf für die Eindüsung in das beladene Absorptionsmedium wird vorzugsweise dem Dampf-Kondensat-Kreislauf des dem Abscheideprozess vorgeschalteten Kraftwerksprozesses entnommen. Dies ist möglich, da für die Eindüsung in das beladene Absorptionsmedium ein Dampf mit niedrigerer Temperatur verwendet werden kann. Ein solcher Dampf ist ca. 100 und 120 °C heiß. Für die Beheizung des Heizprozesses ist jedoch im Allgemeinen ein Dampf mit höherer Temperatur erforderlich, da durch den indirekten Wärmeübergang mit einem Wärmetauscher Wärme verloren geht. Dieser Dampf mit höherer Energie wird hingegen im Allgemeinen z.B. aus der Überströmleitung zu dem Niederdruckteil einer Dampfturbine entnommen. Dieser Dampf hat Temperaturen von ca. 120 bis 160 °C.

In Abhängigkeit von der Fahrweise des Kraftwerksprozesses oder unter Berücksichtigung anderer Parameter im Kraftwerksprozess wird der Dampf vorteilhaft einem Dampferzeugungsprozess entnommen, der nicht an den Stromerzeugungsprozess des Kraftwerks gekoppelt ist. Dadurch ist der Kraftwerksprozess entlastet, wodurch der Wirkungsgrad der Kraftwerksanlage gesteigert wird. Diese Dampfquelle kann ein Dampferzeugungsprozess sein, der z.B. eigens für den Abscheideprozess bereitgestellt wird, oder eine andere Dampfquelle die sonst dauerhaft z.B. für die Bereitstellung von Prozessdampf oder Heizdampf vorgesehen ist.

Vorzugsweise wird nur ein Teil des zugeführten Dampfes in das beladene Absorptionsmedium eingedüst. Ein anderer Teil des zugeführten Dampfes wird mit dem beladenen Absorptionsmedium im Wärmetausch geführt. Dadurch wird der für den Desorptionsprozess bereitgestellte Dampf in zwei parallele Dampfströme aufgeteilt. Die Aufteilung der beiden Dampfströme wird durch einen Regelprozess geregelt.

Bei einer vorteilhaften Weiterbildung des Kohlendioxid-Abtrennungsverfahrens wird der zugeführte Dampf erst mit dem beladenen Absorptionsmedium im Wärmetausch geführt, und anschließend ein Teil des Dampfes in das beladene Absorptionsmedium eingedüst. Dies ist vorteilhaft, wenn zum Betrieb des Abscheideprozesses ohnehin ein Dampf mit hoher Temperatur zur Verfügung steht. Der Dampf wird durch den Wärmetausch mit dem beladenen Absorptionsmedium im Wärmegehalt reduziert und anschließend, zumindest zum Teil, in den Desorptionsprozess eingedüst.

Die auf eine fossilbefeuerte Kraftwerksanlage gerichtete Aufgabe wird erfindungsgemäß gelöst mit einer einer Verbrennungseinrichtung nachgeschalteten Abscheideeinrichtung, zur Abscheidung von Kohlendioxid aus dem kohlendioxidhaltigen Abgas, wobei die Abscheideeinrichtung eine Absorptionseinheit zur Aufnahme von gasförmigen Kohlendioxid sowie eine Desorptionseinheit zur Abgabe von gasförmigen Kohlendioxid aufweist, wobei die Desorptionseinheit eine Eindüseeinrichtung für Dampf aufweist, die an eine Dampfleitung angeschlossen ist, so dass im Betrieb der Abscheideeinrichtung Dampf in die Desorptionseinheit eindüsbar ist.

Dabei geht die Erfindung von der Überlegung aus, dass durch die Eindüseeinrichtung ein Dampf in die Desorptionseinheit direkt eindüsbar ist, wobei der Dampf in der Desorptionseinheit kondensiert und Kondensationswärme freigibt, so dass durch die eingebrachte Kondensationswärme die Abgabe von Kohlendioxid aus einem kohlendioxidbeladenen Absorptionsmedium thermisch austreibbar ist.

Die Eindüseeinrichtung umfasst eine Dampfleitung, die durch die Desorptionseinheit hindurch führt, und vorzugsweise ringförmig ausgebildet ist. Auch die Anordnung mehrerer ringförmiger Leitungen auf unterschiedlichen Höhen innerhalb der Desorptionseinheit ist möglich.

In einer bevorzugten Ausgestaltung der fossilbefeuerten Kraftwerksanlage ist die Eindüseeinrichtung im unteren Bereich der Desorptionseinheit angeordnet. Die Desorptionseinheit umfasst dabei eine entlang einer vertikalen Achse ausgerichteten Säule. Die Säule weist im oberen Bereich einen Einlass und im unteren Bereich einen Auslass auf. Im Betrieb ist somit beladenes Absorptionsmedium im oberen Bereich einführbar und im unteren Bereich ein regeneriertes Absorptionsmedium ausleitbar, wodurch eine Durchströmung der Desorptionseinheit mit beladenem Absorptionsmediums bewirkt ist. Das Austreiben von Kohlendioxid aus einem Absorptionsmedium erfolgt dabei vornehmlich thermisch, da dadurch auf im Kraftwerk bereitgestellte Wärmeenergie zurückgegriffen werden kann. Die Desorptionseinheit kann auch mehrere Säulen aufweisen. Solche Säulen sind in der chemischen Industrie auch als Kolonnen bekannt und dienen dazu, Stoffgemische durch thermische Verfahren zu trennen. Dies erfolgt unter Ausnutzung von Gleichgewichtszuständen zwischen unterschiedlichen Phasen.

Im unteren Bereich der Desorptionseinheit ist ein mit Kohlendioxid beladenes Absorptionsmedium in flüssiger Phase. Durch eine ebenfalls im unteren Bereich der Desorptionseinheit angeordneten Heizeinrichtung ist das beladene Absorptionsmedium beheizbar. Der untere Teil der Desorptionseinheit wird auch als Sumpf bezeichnet. Eine Anordnung der Düsenanordnung möglichst nahe des Sumpfes wirkt sich bei Eindüsung eines Dampfes vorteilhaft auf den Partialdruck des bereits gelösten Kohlendioxids aus. Die erzielbare Verringerung des Partialdrucks bedeutet eine Herabsetzung der Konzentration an Kohlendioxid in der Gasphase, wodurch das Austreiben des in dem beladenen Absorptionsmedium gebundenen Kohlendioxids begünstigt ist. Dadurch ist weniger Energie zum Beheizen der Heizeinrichtung notwendig. Kommt eine mit Dampf beheizbare Heizeinrichtung zum Einsatz, so ist durch die eingesparte Dampfmenge im Kraftwerk zur Erzeugung von elektrischer Energie verfügbar, wodurch der Gesamtwirkungsgrad der Kraftwerksanlage steigt.

Bei einer bevorzugten Ausgestaltung der fossilbefeuerten Kraftwerksanlage umfasst die Eindüseeinrichtung eine Düsenanordnung, welche wiederum eine Anzahl von Düsenköpfen aufweist. Vorzugsweise sind eine Anzahl von Düsenköpfen über die Düsenanordnung verteilt, so dass ein durch die Düsen einleitbarer Dampf gleichmäßig in die Desorptionseinheit einbringbar ist. Die Düsenköpfe sind dabei vorzugsweise in Strömungsrichtung des beladenen Absorptionsmediums ausgerichtet. Dies verhindert unerwünschte Strömungen und gewährleistet die gezielte Eindüsung eines Dampfes in die Desorptionseinheit, die vorzugsweise gleichmäßig erfolgt.

Zweckmäßigerweise ist die Eindüseeinrichtung über die Dampfleitung mit der Anzapfstelle einer Überströmleitung oder einer Dampf-Kondensatleitung einer Dampfturbinenanlage verbunden. Die Wahl der Dampfentnahmestelle, mit der die Eindüseeinrichtung über die Dampfleitung verbunden ist, wird in Abhängigkeit von den erforderlichen und verfügbaren Dampfparametern definiert. Ein für die Eindüsung in die Desorptionseinheit bestimmter Dampf muss dabei über Parameter (Druck und Temperatur) verfügen, die über dem Kondensationspunkt liegen. Vorzugsweise wird der Dampf der Dampf-Kondensatleitung entnommen, welche die Niederdruckstufe der Dampfturbine mit dem Kondensator verbindet. Der in der Dampf-Kondensatleitung geführte Dampf hat dabei Temperaturen von ca. 100 bis 120 °C.

In einer besonderen Weiterbildung der fossilbefeuerten Kraftwerksanlage umfasst die Desorptionseinheit eine mit Dampf beheizbare Heizeinrichtung, die über eine Dampfleitung mit der Eindüseeinrichtung verbunden ist, so dass Dampf aus der Heizeinrichtung zu der Eindüseeinrichtung leitbar, und in die Desorptionseinheit eindüsbar ist. Diese Anordnung erfordert die Verwendung eines Dampfes höherer Temperatur, der vorzugsweise aus der Überströmleitung zwischen dem Mittel- und dem Niederdruckteil einer Dampfturbine entnehmbar ist. Dieser Dampf betreibt zunächst die Heizeinrichtung, indem der Dampf mit dem beladenen Absorptionsmedium im Wärmetausch geführt wird. Dies reduziert die Temperatur des Dampfes. Durch die Dampfleitung, welche die Heizeinrichtung mit der Eindüseeinrichtung verbindet, ist dieser Dampf mit niedrigerer Temperatur nun der Eindüseeinrichtung zuleitbar, und über die Eindüseeinrichtung in die Desorptionseinheit eindüsbar.

Weitere Vorteile der fossilbefeuerten Kraftwerksanlage ergeben sich in analoger Weise aus den entsprechenden Weiterbildungen des voranbeschriebenen Kohlendioxid-Abtrennungsverfahrens.

Nachfolgend werden Ausführungsbeispiele der Erfindung anhand von schematischen Zeichnungen näher erläutert. Es zeigt:
- FIG 1: ein Ausführungsbeispiel eines Kohlendioxid-Abtrennungsverfahrens
- FIG 2: ein Ausführungsbeispiel einer fossilbefeuerten Kraftwerksanlage mit Dampfturbinenanlage und KohlendioxidAbscheidevorrichtung
- FIG 3: ein Ausführungsbeispiel einer fossilbefeuerten Kraftwerksanlage mit Gas- und Dampfturbinenanlage und Kohlendioxid-Abscheidevorrichtung

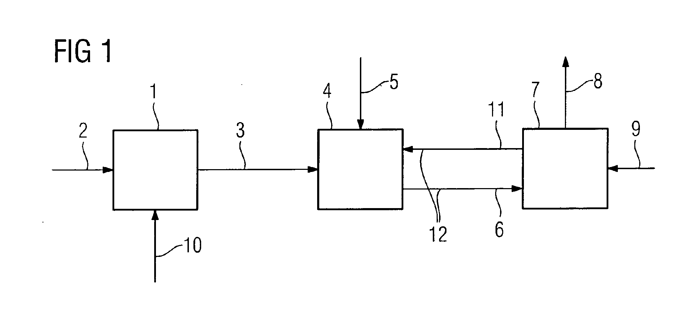

FIG 1 zeigt ein Ausführungsbeispiel eines Kohlendioxid-Abtrennungsverfahrens und insbesondere die Eindüsung von Dampf 9 in den Desorptionsprozess 7. Das Verfahren umfasst im Wesentlichen einen Verbrennungsprozess 1, einen Absorptionsprozess 4 und einen Desorptionsprozess 7.

In dem Verbrennungsprozess 1 wird ein kohlendioxidhaltiges Abgas 3 erzeugt, welches durch das Kohlendioxid-Abtrennungsverfahren von Kohlendioxid befreit werden soll. Dazu wird das kohlendioxidhaltige Abgas 3 dem Absorptionsprozess 4 zugeführt. Dem Absorptionsprozess wird darüber hinaus ein Absorptionsmedium 5 zugeführt. In dem Absorptionsprozess 4 kommt das kohlendioxidhaltige Abgas 3 mit dem Absorptionsmedium 5 in Kontakt, wodurch Kohlendioxid von dem Absorptionsmedium 5 aufgenommen wird, und ein beladenes Absorptionsmedium 6 und ein weitgehend von Kohlendioxid befreites Abgas gebildet wird.

Das beladene Absorptionsmedium 6 wird in den Desorptionsprozess 7 geführt, wo es regeneriert wird. Zur Regenerierung wird nun ein Dampf 9 in den Desorptionsprozess eingedüst. Dieser Dampf kondensiert zu Wasser und gibt dabei Kondensationswärme frei. Diese Kondensationswärme unterstützt den Regenerierungsprozess. Durch die Regenerierung wird ein regeneriertes Absorptionsmedium 11 und ein Gas-Dampfgemisch aus gasförmigem Kohlendioxid 8 und dampfförmigem Absorptionsmedium gebildet. Das Gas-Dampfgemisch wird durch einen Trennprozess, in kondensiertes Absorptionsmedium und gasförmiges Kohlendioxid 8 aufgetrennt. Nicht dargestellt ist die Rückführung des kondensierten Absorptionsmediums in den Kreislauf an Absorptionsmedium 5. Das gasförmige Kohlendioxid 8 kann nun einem Verdichterprozess zugeführt werden, wo es für die weitere Verarbeitung oder einen Transport verflüssigt wird.

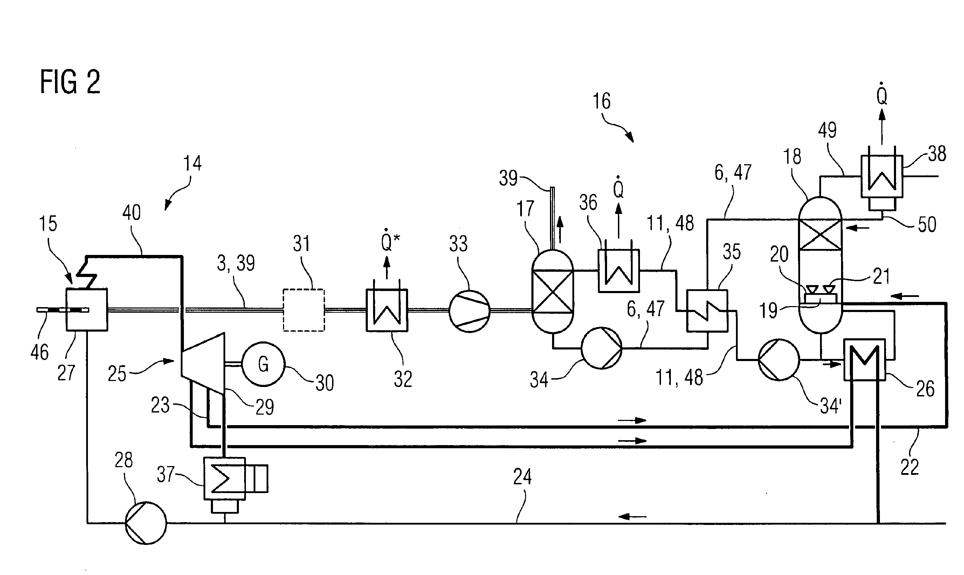

In FIG 2 ist ein Ausführungsbeispiel einer fossilbefeuerten Kraftwerksanlage 14, umfassend eine Dampfturbinenanlage 25 und Abscheidevorrichtung 16 für Kohlendioxid dargestellt.

Der Dampfturbinenanlage 15 ist eine Verbrennungseinrichtung 15 vorgeschaltet. Die Verbrennungseinrichtung 15 umfasst einen befeuerten Kessel 27, dem über eine Brennstoffzufuhrleitung 46 ein fossiler Brennstoff zuführbar ist. In dem befeuerten Kessel 27 erfolgt eine Verbrennung des zuführbaren Brennstoffs, wobei ein kohlendioxidhaltiges Abgas 3, und ein Dampf erzeugt wird. Der befeuerten Kessel 27 ist über eine Dampfleitung 40 mit einer Dampfturbine 29 der Dampfturbinenanlage 25 verbunden. Die Dampfturbine 29 ist durch den zugeführten Dampf antreibbar. Die Dampfturbine 29 treibt wiederum über eine Welle einen Generator 30 zur Stromerzeugung an. Der die Dampfturbine 29 verlassende Dampf wird über eine Leitung dem Kondensator 37 zugeführt. Der Kondensator 37 ist zur Rückführung eines kondensierten Dampfes wiederum über eine Dampf-Kondensatleitung 24 mit dem befeuerten Kessel 27 verbunden. Zur Förderung des Kondensats ist in die Dampf-Kondensatleitung 24 eine Kondensatpumpe 28 geschaltet.

Das kohlendioxidhaltige Abgas 3 verlässt den befeuerten Kessel und ist über eine Rauchgasleitung 39 der die Abscheideeinrichtung 16 umfassenden Absorptionseinheit 17 zuführbar. In die Rauchgasleitung 39 sind ein Rauchgasreinigungssystem 31, ein Rauchgaskühler 32 und ein Gebläse 33 geschaltet. Das Rauchgasreinigungssystem 31 kann z.B. eine Entschwefelungsanlage oder andere Systeme zur Reinigung des Rauchgases umfassen. Durch den Rauchgaskühler 32 wird dem kohlendioxidhaltigen Abgas 3 Wärme entzogen. Die Notwendigkeit einer Rauchgaskühlung ist dabei von dem erforderlichen Temperaturniveau in der Absorptionseinheit abhängig. Das Rauchgasreinigungssystem 31, der Rauchgaskühler 32 und das Gebläse sind optional und können auch in einer anderen Reihenfolge angeordnet werden.

Die Abscheideeinrichtung 16 umfasst im Wesentlichen eine Absorptionseinheit 17 und eine Desorptionseinheit 18. Die Absorptionseinheit 17 kann aus mehreren Kolonnen bestehen, die wiederum mit Einbauten, so genannten Packungen versehen sind. Die Packungen dienen einer Vergrößerung der Oberfläche, was vorteilhaft für die Absorption des Kohlendioxids aus dem Abgas in das Absorptionsmedium ist. Neben dem kohlendioxidhaltigen Abgas 3 ist der Absorptionseinheit 17 über eine Leitung für regeneriertes Absorptionsmedium 48 ein Absorptionsmedium zuführbar. Durch die Durchführung des kohlendioxidhaltigen Abgases 3 und des Absorptionsmediums ist eine Reinigung des Abgases erzielbar, so dass über eine Rauchgasleitung 39 ein weitgehend von Kohlendioxid befreites Abgas ausleitbar ist. Ein in der Absorptionseinheit 17 durch die Reinigung entstehendes beladene Absorptionsmedium 6 ist über eine Leitung für beladenes Absorptionsmedium 47 der Desorptionseinheit zuführbar.

In die Leitung für beladenes Absorptionsmedium 47 sind eine Absorptionsmittelpumpe 34 und ein Kreuzstromwärmetauscher 35 geschaltet. Die Absorptionsmittelpumpe 34 dient der Förderung des beladenen Absorptionsmittels 6. In dem Kreuzstromwärmetauscher 35 ist das beladene Absorptionsmedium 6 in entgegengesetzter Richtung zu einem heißen regenerierten Absorptionsemdium 11 leitbar. Dadurch ist eine Vorwärmung des beladenen Absorptionsmediums 6 erzielbar.

Die Desorptionseinheit 18 kann aus mehreren Kolonnen bestehen, die wiederum mit Einbauten, so genannten Packungen versehen sind. Die Packungen dienen einer Vergrößerung der Oberfläche, was vorteilhaft für die Desorption des beladenen Absorptionsmittels 7 ist. Die Desorptionseinheit umfasst ferner eine Eindüseeinrichtung 19, die im Unteren Bereich der Desorptionseinheit 18 angeordnet ist. Die Eindüseeinrichtung 19 besteht aus einer Leitung, durch die ein Dampf leitbar ist, und einer Düsenanordnung 20, die eine Anzahl von Düsenköpfen 21 aufweist, durch welche der durch die Eindüseeinrichtung 19 leitbare Dampf in die Desorptionseinheit 17 eindüsbar ist. Die Eindüsung erfolgt vorzugsweise in Strömungsrichtung des Absorptionsmediums, also von oben nach unten. Die Eindüseeinrichtung 19 ist über eine Dampfleitung 22 verbunden mit einer Anzapfstelle einer Überströmleitung 23 der Dampfturbine 29. Nicht gezeigt ist hier eine alternative Dampfleitung, welche die Eindüseeinrichtung 19 mit der Dampf-Kondensatleitung 24 verbindet. Die Entnahme von Dampf für die Zuleitung in die Eindüseeinrichtung 19 aus einer anderen Dampfleitung ist ebenso möglich.

In der Desorptionseinheit 18 erfolgt eine weitgehende Abgabe von Kohlendioxid von dem beladenen Absorptionsmedium 6, so dass ein gasförmiges Kohlendioxid 8 und das regeneriertes Absorptionsmedium 11 gebildet wird. Ein Teil des die Desorptionseinheit 18 verlassende regenerierten Absorptionsmediums 11 wird über eine Heizeinrichtung 26 erwärmt und erneut in die Desorptionseinheit 18 zugeführt. Als Heizeinrichtung kommt hier ein Reboiler zum Einsatz. Ein anderer Teil des die Desorptionseinheit 18 verlassenden regenerierten Absorptionsmediums 11 wird über eine Leitung für regeneriertes Absorptionsmedium 48 der Absorptionseinheit 17 zugeführt. In die Leitung für regeneriertes Absorptionsmedium 48 ist eine Absorptionsmittelpumpe 34', der Kreuzstromwärmetauscher 35 und ein Absorptionsmittelkühler 36 geschaltet. Durch den Kreuzstromwärmetauscher 35 und den Absorptionsmittelkühler 36 ist dem regenerierten Absorptiosmedium Wärme entziehbar. Der Einsatz des Absorptionsmittelkühlers 36 ist optional.

Der Desorptionseinheit 18 ist darüber hinaus über eine Gasleitung 49 mit einer Trennvorrichtung 38 verbunden. In der Trennvorrichtung, dem so genannten Stripper-Kondensator, erfolgt die Trennung von dampfförmigem Absorptionsmedium und gasförmigem Kohlendioxid durch Kondensation des Absorptionsmediums. Das kondensierte Absorptionsmedium ist über eine Kondensatleitung 50 in die Desorptionseinheit 18 zurückführbar. Das gasförmige Kohlendioxid steht nun einer weiteren Verarbeitung, z.B. einer Verflüssigung, zur Verfügung.

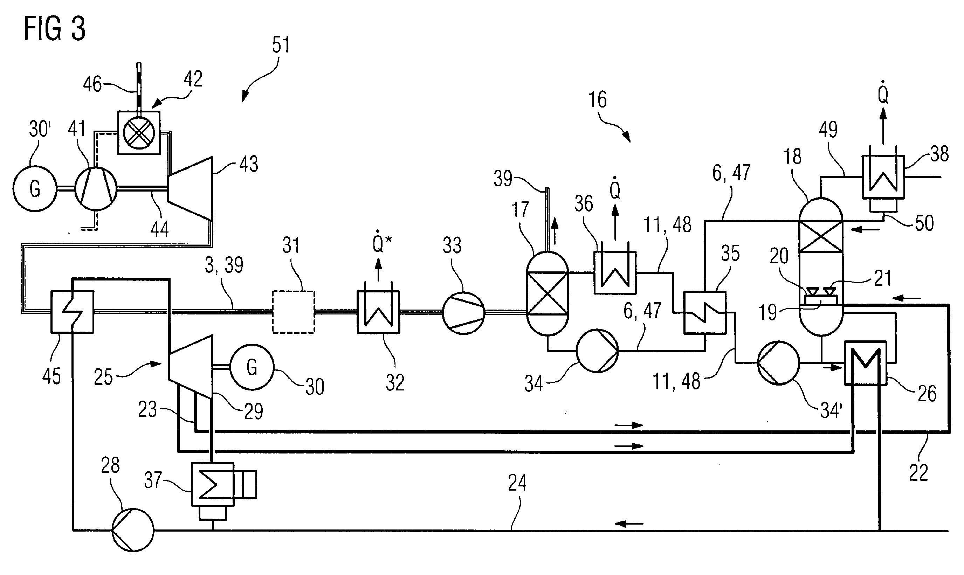

Die in FIG 3 dargestellte fossilbefeuerte Kraftwerksanlage 14 zeigt eine Gas- und Dampfturbinenkraftwerksanlage 51 mit Abscheideeinrichtung 16 für Kohlendioxid. Die Gas- und Dampfturbinenkraftwerksanlage 51 ist der Abscheideeinrichtung 16 vorgeschaltet. Die Gas- und Dampfturbinenkraftwerksanlage 51 umfasst eine Gasturbineneinheit und eine Dampfturbineneinheit. Die Gasturbineneinheit besteht im Wesentlichen aus einer Gasturbine 43, welche über eine Welle mit einem Luftverdichter 41 und einem Generator 30 verbunden ist. Der Luftverdichter 41 ist mit der Brennkammer 42 verbunden. Ebenso mit der Brennkammer 42 verbunden ist eine Brennstoffzuführleitung 46. Ein durch eine Verbrennung entstehendes kohlendioxidhaltiges Abgas ist über eine Rauchgasleitung der Gasturbine 43 zuführbar. Ein die Gasturbine 43 verlassendes kohlendioxidhaltige Abgas ist über eine Rauchgasleitung der Dampfturbineneinheit zuleitbar. Die Dampfturbineneinheit besteht aus dem Abhitzedampferzeuger 45, einer Dampfturbine 29, einen Generator 30 und einem Kondensator 37. Die Rauchgasleitung ist mit dem Abhitzedampferzeuger 45 der Dampfturbineneinheit verbunden. Der Abhitzedampferzeuger 45 ist für die Dampferzeugung bereitgestellt und versorgt die Dampfturbine 39 über eine Dampfleitung mit Dampf. Die Dampfturbine 39 ist über eine Welle mit einem Generator 30 zur Stromerzeugung verbunden. Die nachgeschaltete Abscheidevorrichtung 16 ist im Wesentlichen analog ausgestaltet wie in FIG 2 bei dem Dampfkraftwerk.

Mit der Erfindung ist der Betrieb eines im Kohlendioxidausstoß reduzierten Kraftwerks mit hoher Effizienz möglich. Durch die direkte Eindüsung von Dampf in die Desorptionseinheit wird der Sumpfverdampfer entlastet und höherwertiger Dampf mit dem Preis der Zugabe von niederwertigem Dampf eingespart. Dadurch wird Energie zum Betreiben des Desorptionsprozesses eingespart. Die Vorrichtung zum Abtrennen von Kohlendioxid aus einem kohlendioxidhaltigen Abgas ist Bestandteil der fossilbefeuerten Kraftwerksanlage. Durch die schaltungstechnische Verbesserung ist eine wesentliche Effizienzsteigerung gegenüber einer herkömmlichen Gasreinigungseinrichtung einer fossilbefeuerten Kraftwerksanlage erzielbar.

## Patentansprüche

1. Verfahren zum Abtrennen von Kohlendioxid aus einem Rauchgas einer fossilbefeuerten Kraftwerksanlage, bei dem
a) in einem Verbrennungsprozess (1) ein fossiler Brennstoff (2) verbrannt wird, wobei ein heißes, kohlendioxidhaltiges Abgas (3) erzeugt wird,
b) in einem Absorptionsprozess (4) kohlendioxidhaltiges Abgas (3) mit einem Absorptionsmedium (5) in Kontakt gebracht wird, wobei Kohlendioxid von dem Absorptionsmedium (5) aufgenommen wird, wobei ein beladenes Absorptionsmedium (6) gebildet wird,
c) in einem Desorptionsprozess (7) von dem beladenen Absorptionsmedium (6) gasförmiges Kohlendioxid (8) thermisch ausgetrieben wird,
d) ein Dampf (9) zugeführt wird, der in das beladene Absorptionsmedium (6) eingedüst wird, wobei die durch die Kondensation des Dampfes (9) freiwerdende Kondensationswärme auf das beladene Absorptionsmedium (6) übertragen wird.

2. Verfahren nach Anspruch 1, bei dem durch die Menge an eingedüstem Dampf (9) in etwa die Menge an Absorptionsmedium (5) ausgeglichen wird, die dem Absorptionsmittelkreislauf (12) durch den Absorptionsprozess (4)/Desorptionsprozess (7) entzogen wird.

3. Verfahren nach Anspruch 1 oder 2, bei dem der Dampf (9) an mehreren Stellen in den Desorptionsprozess (7) eingedüst wird.

4. Verfahren nach einem der Ansprüche 1 bis 3, bei dem der Dampf (9) für die Eindüsung dem Dampf-Kondensat-Kreislauf eines fossilbefeuerten Kraftwerks entnommen wird.

5. Verfahren nach einem der Ansprüche 1 bis 4, bei dem der Dampf (9) für die Eindüsung einem Dampferzeugerprozess entnommen wird, der nicht an den Stromerzeugungsprozess des Kraftwerks gekoppelt ist.

6. Verfahren nach einem der Ansprüche 1 bis 5, bei dem nur ein Teil des zugeführten Dampfes (9) in das beladene Absorptionsmedium (6) eingedüst wird, und bei dem ein anderer Teil des zugeführten Dampfes (9) mit dem beladenen Absorptionsmedium (6) im Wärmetausch geführt wird.

7. Verfahren nach einem der Ansprüche 1 bis 6, bei dem
a) der zugeführte Dampf (9) mit dem beladenen Absorptionsmedium im Wärmetausch geführt wird, wobei ein im Wärmegehalt reduzierter Dampf (13) gebildet wird,
b) ein Teil des im Wärmegehalt reduzierte Dampfes (13) in das beladene Absorptionsmedium (6) eingedüst wird.

8. Fossilbefeuerte Kraftwerksanlage (14) mit einer einer Verbrennungseinrichtung (15) nachgeschalteten Abscheideeinrichtung (16), zur Abscheidung von Kohlendioxid aus dem kohlendioxidhaltigen Abgas (3), wobei die Abscheideeinrichtung (16) eine Absorptionseinheit (17) zur Aufnahme von gasförmigen Kohlendioxid sowie eine Desorptionseinheit (18) zur Abgabe von gasförmigen Kohlendioxid aufweist,
**dadurch gekennzeichnet, dass** die Desorptionseinheit (18) eine Eindüseeinrichtung (19) für Dampf aufweist, die an eine Dampfleitung (22) angeschlossen ist, so dass im Betrieb der Abscheideeinrichtung (16) Dampf in die Desorptionseinheit (18) eindüsbar ist.

9. Fossilbefeuerte Kraftwerksanlage (14) nach Anspruch 8, **dadurch gekennzeichnet, dass** die Düsenanordnung (20) im unteren Bereich der Desorptionseinheit (18) angeordnet ist.

10. Fossilbefeuerte Kraftwerksanlage (14) nach Anspruch 8 oder 9, **dadurch gekennzeichnet, dass** die Eindüseeinrichtung (19) eine Düsenanordnung (20) umfasst, wobei die Düsenanordnung (20) eine Anzahl von Düsenköpfen (21) aufweist, wobei die Düsenköpfe (21) in Strömungsrichtung des beladenen Absorptionsmediums (6) ausgerichtet sind.

11. Fossilbefeuerte Kraftwerksanlage (14) nach einem der Ansprüche 8 bis 10, **dadurch gekennzeichnet, dass** die Eindüseeinrichtung (19) über die Dampfleitung (22) mit der Anzapfstelle einer Überströmleitung (23) oder einer Dampf-Kondensatleitung (24) einer Dampfturbinenanlage (25) verbunden ist.

12. Fossilbefeuerte Kraftwerksanlage (14) nach einem der Ansprüche 8 bis 10, **dadurch gekennzeichnet, dass** die Desorptionseinheit (18) eine mit Dampf beheizbare Heizeinrichtung (26) umfasst, und dass die Eindüseeinrichtung (19) über die Dampfleitung (22) mit der Heizeinrichtung (26) verbunden ist, so dass Dampf aus der Heizeinrichtung (26) durch die Eindüseeinrichtung (19) in die Desorptionseinheit (18) eindüsbar ist.
